(19) **Europäisches Patentamt European Patent Office Office européen des brevets**

(11) **EP 4 707 040 A1**

(12) **EUROPEAN PATENT APPLICATION**

(43) Date of publication:
11.03.2026 Bulletin 2026/11

(21) Application number: 24198932.6

(22) Date of filing: 06.09.2024

(51) International Patent Classification (IPC):
*B60L 50/75* (2019.01)  *B60L 58/13* (2019.01)
*G01C 21/34* (2006.01)  *G06Q 10/047* (2023.01)
*G06Q 50/06* (2024.01)

(52) Cooperative Patent Classification (CPC):
**G01C 21/3469; B60L 50/75; B60L 53/64;**
**B60L 53/67; B60L 53/68; B60L 58/13; B60L 58/40;**
**G01C 21/343; G06Q 10/047; G06Q 50/06;**
B60L 2200/36; B60L 2240/622; B60L 2240/68;
B60L 2240/70; B60L 2240/80;  (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **VOLVO TRUCK CORPORATION**
**405 08 Göteborg (SE)**

(72) Inventors:
• **DESAI, Parthav**
**417 28 Göteborg (SE)**
• **SUMAN, Saurabh**
**417 47 Göteborg (SE)**

(74) Representative: **Zacco Sweden AB**
**P.O. Box 5581**
**Löjtnantsgatan 21**
**114 85 Stockholm (SE)**

(54) **A MISSION MANAGEMENT SYSTEM FOR A HEAVY-DUTY VEHICLE AND A COMPUTER-IMPLEMENTED METHOD**

(57)    A mission management system for a heavy-duty vehicle, comprising processing circuitry configured to: receive a request for a transport mission; identify one or more available routes; identify, along said one or more available routes, energy supply stations which are suitable for re-supplying energy to the heavy-duty vehicle and which have available un-booked time slots for such re-supplying of energy; determine, for at least one available un-booked time slot of at least one of the identified energy supply stations, a probability of missing that time slot due to the heavy-duty vehicle arriving late to the energy supply station;
select, based on the determined probability, a route and an energy re-supply plan associated thereto, for the heavy-duty vehicle for accomplishing said transport mission; and present the selected route and associated energy re-supply plan to a user interface and/or provide the selected route and associated energy re-supply plan for storage in a memory.

FIG. 2

EP 4 707 040 A1

(52) Cooperative Patent Classification (CPC): (Cont.)
B60L 2250/16; B60L 2260/52; B60L 2260/54

**Description**

**TECHNICAL FIELD**

The disclosure relates generally to a mission management system. In particular aspects, the disclosure relates to a mission management system for a heavy-duty vehicle and also to a computer-implemented method. The disclosure also relates to a heavy-duty vehicle comprising such a mission management system. The disclosure can be applied to heavy-duty vehicles, such as trucks, buses, and construction equipment, among other vehicle types. Although the disclosure may be described with respect to a particular vehicle, the disclosure is not restricted to any particular vehicle.

**BACKGROUND**

Due to the high capex price of building hydrogen ($H_2$) refueling stations, it is estimated that in the future the relevant infrastructure will be sparsely populated and the capacity of high pressure $H_2$ storage at those refueling stations will be limited as well, to increase utilization and decrease costs. These factors will increase the risk of queuing and may thus result in inefficient transport operations.

**SUMMARY**

According to a first aspect of the disclosure, there is provided a mission management system for a heavy-duty vehicle, wherein the mission management system comprises processing circuitry and a memory, wherein the processing circuitry is configured to:

- receive a request for a transport mission for the heavy-duty vehicle, the transport mission including a start location and a target location,
- identify one or more available routes from the start location to the target location,
- identify, along said one or more available routes, energy supply stations which are suitable for re-supplying energy to the heavy-duty vehicle and which have available un-booked time slots for re-supplying energy to the heavy-duty vehicle,
- determine, for at least one available un-booked time slot of at least one of the identified energy supply stations, a probability of missing that time slot due to the heavy-duty vehicle arriving late to the energy supply station,
- select, based on the determined probability, a route and an energy re-supply plan associated thereto, for the heavy-duty vehicle for accomplishing said transport mission, and
- present the selected route and associated energy re-supply plan to a user interface and/or provide the selected route and associated energy re-supply plan for storage in the memory.

The first aspect of the disclosure may seek to provide a mission management system which allows for efficient transport missions to be carried out. In particular, the mission management system may provide a robust selection of energy supply stations. A technical benefit may include that, by including the probability of missing an available un-booked time slot of an identified energy supply station, an improved selection may be made with respect to which route to take and where to refuel/recharge. By taking said probability into account, an informed decision may be made by the mission management system, which may otherwise not be apparent. For example, if there is a very high probability of missing a time slot of a first energy supply station and a very low probability of missing a time slot of the a second energy supply station, the mission management system may determine that selecting the second energy supply station is more efficient (for example time-wise or cost-wise), even though other factors might suggest the contrary (e.g. shorter route involving the first energy supply station and longer route involving the second energy supply station).

Although in the background section above $H_2$ refueling stations have been given as an example, similar considerations may be valid for electric battery recharging stations. Thus, the present disclosure may be implemented in relation to any suitable energy supply stations, including $H_2$ refueling stations and battery recharging stations.

As can be understood from the above discussion, an energy re-supply plan associated with a selected route may include where to refuel/recharge, i.e. at which energy supply station. Furthermore, such an energy re-supply plan may also include how much to refuel/recharge at said energy supply station. An energy re-supply plan may, of course, also include more than one energy supply station along the selected route, e.g. depending on the length of the route and/or the expected energy consumption along the route.

The mission management system may also provide a speed plan for the heavy-duty vehicle to fulfill its transport mission in an efficient way. Such a speed plan may, for example, take into account expected energy consumption along different sections of the route, remaining time to a selected time slot at an energy supply station, etc. For example, for some sections of the route a lower speed may be recommended for energy efficiency, whereas for other sections, a higher speed may be recommended for reducing the risk of missing a time slot at an energy supply station.

The processing circuitry of the mission management system may suitably consider a tradeoff between optimality and robustness. For instance, the processing circuitry may balance the possibility of reducing the cost for one option with the probability of missing a time slot in that option. For example, if you risk missing the time slot or risk getting out of fuel or running out of battery energy, then it may not be worth going for an identified minimum cost option. The mission management system may then instead suggest an option for a higher cost with reduced risk.

Optionally in some examples, including in at least one preferred example, the processing circuitry may be further configured to determine a measure of criticality with respect to missing said time slot and to also base the selection of route and associated energy re-supply plan on the determined measure of criticality, wherein the measure of criticality is in the form of a criticality parameter value which is calculated by the processing circuitry based on other parameters accessible to the processing circuitry, including at least one of:

- an expected fuel level or battery charge level of the heavy-duty vehicle at the energy supply station,
- an expected queue time at the identified energy supply station,
- price of fuel, such as hydrogen, or price of electricity, at the energy supply station; or difference in price compared to other energy supply stations,
- driving time limit at said time slot,
- distance from the current location of the heavy-duty vehicle to the energy supply station having said time slot.

A technical benefit may include that by also including a measure of criticality in the selection of route and associated energy re-supply plan, the probability of missing a time slot can be given different weights. For example, if the mission management system has a selection between two options where a first option includes a higher probability of missing the associated time slot while the second option includes a lower probability of missing the associated time slot, then the processing circuitry of the mission management system may still select the first option if the consequences (i.e. the criticality/severity) of missing that time slot is considerably lower than what would be the case if the time slot of the second option would be missed. It may be readily understood that each one of the above input parameters may influence which route and energy re-supply plan selection the processing circuitry makes. When it comes to the distance of the energy supply station from the current location of the heavy-duty vehicle, it can be readily understood that the probability of missing the time slot may be higher if the distance to the energy supply station is larger, because then there are more chances that something may go out of plan. The processing circuitry may suitably be configured to ignore that to some extent, to avoid always selecting the nearest energy supply station. For instance, the probability may instead be weighted by said distance. In some examples, the probability of missing the time slot may be a function of distance to the energy supply station and/or a function of the time of travel left to the energy supply station and/or any historic information about how likely it is for the traffic in a certain section to change based on historic information.

Optionally in some examples, including in at least one preferred example, said associated energy re-supply plan includes a selected available un-booked time slot at a selected energy supply station, wherein the processing circuitry is further configured to: - automatically book or send instructions to book said selected available un-booked time slot. A technical benefit may include that by booking the time slot, the risk of the transport mission becoming inefficiently executed is reduced. For example, one parameter that can be rendered moot by booking is expected queue time at the identified energy supply station, which may otherwise play a role. Thus, if the heavy-duty vehicle is expected to arrive at an energy supply station without booking, an average queue time at the energy supply station may be relevant to consider for the processing circuitry when selecting route and associated energy re-supply plan. Of course, the processing circuitry may also take into account the fact that the queue time may change based on time of the day, day of week, season etc., For example, expected queue times may be obtained from the energy supply stations or any other system. The expected queue times may be based on historical data or other models of queue times. Also, the expected queue times may be updated, considering that the closer to the relevant time slot, the higher may the accuracy of prediction be. In at least some examples, a booking of a time slot at an energy supply station may come with a requirement that the heavy-duty vehicle must arrive within a certain time window.

Optionally in some examples, including in at least one preferred example, the processing circuitry may be further configured to:

- subsequently to presenting and/or providing the selected route and associated energy re-supply plan, redetermine, for said at least one time slot, the probability of missing the time slot due to the heavy-duty vehicle arriving late to the energy supply station,
- determine, based on the redetermined probability, that the previously selected route and associated energy re-supply plan is cancelled, and select a new route and a new energy re-supply plan associated thereto,
- present the selected new route and associated energy re-supply plan to a user interface and/or provide the selected new route and associated energy re-supply plan for storage in the memory.

A technical benefit may include that if certain conditions change along the route, the mission management system may re-evaluate its previous selection and, if a more beneficial option is available, select a new route and associated energy re-supply plan. In other words, the mission management system does not need to be locked to an already selected plan. For example, if the probability of missing the time slot has increased considerably, for example due to unexpected traffic situation, then the processing circuitry of mission management system may suitably select a new route and associated energy re-supply plan. A possibility is that the processing circuitry may maintain its route selection but select a different energy re-supply plan. For instance, the processing circuitry may identify another energy supply station along the same route, for which station the probability of missing an available un-booked time slot is much lower. In such case, the heavy-duty vehicle may stay on the same route, but the plan is changed to re-supplying energy at said other energy supply station.

Optionally in some examples, including in at least one preferred example, the processing circuitry may be further configured to:

- compare the determined probability of missing the time slot of the identified energy supply station with a predefined limit value (the determined probability may have, optionally, been weighted by the previously mentioned criticality parameter value), and then

  a) - determine, based on the comparison, that the determined probability of missing the time slot is lower than the predefined limit value, and

  - include said time slot of the identified energy supply station in the selected energy re-supply plan, or

  b) - determine, based on the comparison, that the determined probability of missing the time slot is higher than the predefined limit value, and

  - exclude said time slot of the identified energy supply station from the selected energy re-supply plan.

A technical benefit may include that comparing the determined probability with at predefined limit value allows for a simple and straightforward determination process for the processing circuitry.

Optionally in some examples, including in at least one preferred example, the processing circuitry may be further configured to:

- include the determined probability as an input parameter in a function,
- compare the resulting output value of the function, with a predefined allowable range of output values, and then
- upon determining that the resulting output value is within the predefined allowable range of output values, include the identified energy supply station in the selected energy re-supply plan, or
- upon determining that the resulting output value is outside the predefined allowable range of output values, exclude the identified energy supply station from the selected energy re-supply plan.

A technical benefit may include that by using the determined probability as an input parameter in a function, a more robust selection may be made by the processing circuitry.

Optionally in some examples, including in at least one preferred example, the processing circuitry may be further configured to include at least one of the following additional input parameters in said function:

- an expected queue time at the identified energy supply station (e.g. if no booking of the time slot has been made),
- an expected fuel level or battery charge level of the heavy-duty vehicle at the energy supply station.

A technical benefit may include that by also including at least one of the above parameters, the robustness of the selection of route and associated energy re-supply plan made by the processing circuitry may be improved. In other examples, each one of the above (or other) input parameters may be assessed in separate functions. In other words, all input parameters do not need to be included in a common single function, but may be used by the processing circuitry in different functions providing respective output values that the processing circuitry may take into account for its selection of route and associated energy re-supply plan.

Optionally in some examples, including in at least one preferred example, the processing circuitry may be further configured to:

- determine, for each one of at least two available un-booked time slots of a common or of a respective energy supply station, a respective probability of missing that time slot,

- calculate, for each one of the determined probabilities, a respective output value from a cost function, wherein the cost function includes the probability of missing a time slot as one of a plurality of input parameter values,
- identify the lowest calculated output value,

wherein the selection of the route and associated energy re-supply plan is based on the input parameter values that results in the lowest output value of the cost function.

A technical benefit may include that by using a const function, the processing circuitry may provide a robust calculation and selection of an appropriate route and associated energy re-supply plan. In particular, the cost function may take into account several input parameter values (risk factors) and the transport mission may be efficiently carried out.

Optionally in some examples, including in at least one preferred example, the cost function may further include one or more of the following input parameters:

- price of fuel, such as hydrogen, or price of electricity, at the energy supply station;
- mass of fuel, such as hydrogen, or amount of electric energy, expected to be added to the heavy-duty vehicle at the energy supply station;
- average queue time at the energy supply station if the heavy-duty vehicle arrives without a time slot having been booked;
- expected fuel level or state of charge of battery of the heavy-duty vehicle at arrival to the energy supply station;
- effectively added fuel or effectively added electric energy, in terms of difference in fuel/charge level at completion of transport mission with or without refueling event,
- distance from the current location of the heavy-duty vehicle to the energy supply station having said time slot.

Analogously to the previous explanations, a technical benefit may include that the processing circuitry may achieve a more robust selection of route and energy re-supply plan by including one or more of said input parameters in a cost function.

A cost function may be formulated to holistically represent a cost to fulfill a transport mission. Suitably, the processing circuitry may be configured to calculate and find an option which results in a low cost. The term "cost" may include various types of costs, including for example cost of refuel/recharge, cost to drive, cost of time (driver salaries, missing a planned delivery), cost of component ageing etc.

Cost functions in various implementation and in various technical industries are well known *per se* and the present disclosure is not limited to any particular formulation of a cost function. Just to give a simple illustrative example, if it is desired to minimize a cost function, a formulation of the total cost, can be along the following example:

$$\min \sum_{i=1}^{N-1} \left( C_{driving} + C_{fueling} + C_{braking} + C_{triptime} \right)$$

In this representation, the whole trip is discretized into N steps, and 'i' represents the index of the step. The different costs may be determined in any suitable way. For example, the cost of refueling $C_{fueling}$ may be formulated as indicated below (considering additional factors such as queuing time and probability to be late):

$$C_{fueling} = \frac{P_{fuel}*m + f\left(p_{late}, T_{queue}, FL_{refuel}\right)}{m_{effective}} + y * additional\ time\ for\ refueling\ stop$$

where:

$C_{fueling}$ = cost function for optimization
$P_{fuel}$ = price of hydrogen
m = mass of fuel added at refueling
$p_{late}$ = probability of being late and missing out on the refueling slot
$T_{queue}$ = average queue time at the refilling station if the heavy-duty vehicle arrives without booking
$FL_{refuel}$ = fuel level of the truck just before refueling (can be absolute value or relative value).
$m_{effective}$ = effectively added fuel. This may be the difference in fuel level of the heavy-duty vehicle at the end of the trip with and without the refueling event.

Additional time for refueling stop may include the additional time to refuel and also the time taken to take the detour and other changes in the time of travel caused by refueling. Hence it may be the additional time the heavy-duty vehicle would take to reach its destination with and without refueling.

The function $f(p_{late}, T_{queue}, FL_{refuel})$ can have various forms for example:

$$f\left(p_{late}, T_{queue}, FL_{refuel}\right) = a * p_{late}^b * T_{queue}^c * FL_{refuel}^d$$

Where a, b, c and d are constants.
Or it can be

$$f\left(p_{late}, T_{queue}, FL_{refuel}\right) = a1 * p_{late}^b + a2 * T_{queue}^c + a3 * FL_{refuel}^d$$

Where al, a2 and a3 are also constants.

The above functions and equations are just illustrative examples and other functions and equations may be readily used as desired. Furthermore, as already explained above, in some examples the processing circuitry may for simplicity just compare the probability of missing a time slot with a predefined value for making its selection (however, the determined probability may suitably and optionally, have been weighted by the previously discussed criticality parameter value). Furthermore, the above example (and other examples) may be reformulated for battery recharging instead of refueling.

Optionally in some examples, including in at least one preferred example, the heavy-duty vehicle may be a fuel cell electric vehicle, FCEV, powered by hydrogen, $H_2$, wherein the processing circuitry is configured to identify, along said one or more available routes, energy supply stations in the form of refueling stations, which have available un-booked time slots for refueling the heavy-duty vehicle with hydrogen.

A technical benefit of implementing the mission management system for FCEVs may include that the $H_2$ refueling infrastructure is still rather limited, and therefore a route and refueling planning offered by the teachings of the present disclosure may allow for more efficient completions of transport missions.

Optionally in some examples, including in at least one preferred example, the heavy-duty vehicle may be a battery electric vehicle, BEV, powered by one or more traction batteries, wherein the processing circuitry is configured to identify, along said one or more available routes, energy supply stations in the form of recharging stations, which have available un-booked time slots for recharging the traction batteries of the heavy-duty vehicle. A technical benefit of implementing the mission management system for BEVs may include, analogously to above, that the battery recharging infrastructure is still rather limited, and therefore a route and refueling planning offered by the teachings of the present disclosure may allow for more efficient completions of transport missions.

Optionally in some examples, including in at least one preferred example, the mission management system is located onboard the heavy-duty vehicle. Optionally in some examples, including in at least one preferred example, at least a part of the mission management system is located remotely offboard from the heavy-duty vehicle, such as located on a remote server communicating with the heavy-duty vehicle.

According to a second aspect of the disclosure, there is provided a heavy-duty vehicle comprising the mission management system of the first aspect, including any example thereof. The second aspect of the disclosure may, analogously to the first aspect, seek to provide an efficient completion of a transport mission. Technical benefits may largely correspond to the technical benefits of the first aspect, including any examples thereof.

Optionally in some examples, including in at least one preferred example, the heavy-duty vehicle is a fuel cell electric vehicle, FCEV, powered by hydrogen, $H_2$.

Optionally in some examples, including in at least one preferred example, the heavy-duty vehicle is a battery electric vehicle, BEV, powered by one or more traction batteries.

According to a third aspect of the disclosure, there is provided a computer-implemented method, comprising:

- receiving, by processing circuitry of a mission management system, a request for a transport mission for the heavy-duty vehicle, the transport mission including a start location and a target location,
- identifying, by the processing circuitry, one or more available routes from the start location to the target location,
- identifying, by the processing circuitry, along said one or more available routes, energy supply stations which are suitable for re-supplying energy to the heavy-duty vehicle and which have available un-booked time slots re-supplying energy to the heavy-duty vehicle,
- determining, by the processing circuitry, for at least one available un-booked time slot of at least one of the identified energy supply stations, a probability of missing that time slot due to the heavy-duty vehicle arriving late to the energy supply station,
- selecting, by the processing circuitry, based on the determined probability, a route and an energy re-supply plan associated thereto, for the heavy-duty vehicle for accomplishing said transport mission, and
- presenting, by the processing circuitry, the selected route and associated energy re-supply plan to a user interface and/or provide the selected route and associated energy re-supply plan for storage in the memory.

The third aspect of the disclosure may, analogously to the first aspect, seek to provide an efficient completion of a transport mission. Technical benefits may largely correspond to the technical benefits of the first aspect, including any examples thereof.

The computer-implemented method may include various analogous examples to the examples discussed previously in relation to the first aspect. Thus, the various actions that the processing circuitry may be configured to perform may analogously be included as actions performed by the processing circuitry in corresponding examples of the computer-implemented method of the third aspect.

According to a fourth aspect of the disclosure, there is provided a computer program product comprising program code for performing, when executed by the processing circuitry, the method of the third aspect, including any example thereof.

According to a fifth aspect of the disclosure, there is provided a non-transitory computer-readable storage medium comprising instructions, which when executed by the processing circuitry, cause the processing circuitry to perform the method of the third aspect, including any example thereof.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

FIG. 1 illustrates a heavy-duty is vehicle according to at least on example of this disclosure.
FIG. 2 illustrates a mission management system according to at least one example of this disclosure.
FIG. 3 illustrates a mission management system according to at least one example of this disclosure, wherein the mission management system communicates with a remote server.
FIG. 4 illustrates schematically a computer-implemented method according to at least one example of this disclosure.
FIG. 5 is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

Due to the high capex price of building energy supply stations such as $H_2$ refueling stations, it is envisaged that the infrastructure will be sparse in the future and the capacity of, for example, high pressure $H_2$ storage will be limited as well. Queueing at the refueling stations is a risk that may need to be accounted for when planning refueling operations. The mission management system of the present disclosure allows for an efficient completion of a transport mission to be achieved by identifying available un-booked time slots at energy supply stations, and determining the probability of missing said time slots of different energy supply stations. Based on the determined probability, an efficient (e.g. time and/or cost efficient) route and associated energy re-supply plan may be selected by the processing circuitry of the mission management system.

An identified energy supply station having an available un-booked time slot may suitably be booked by the management system or in other ways, e.g. by the driver or a fleet operator. However, booking is not mandatory for implementing the present disclosure. If the identified time slot of an energy supply station included in the energy re-supply plan will be left un-booked, then the processing circuitry may suitably take into account other factors, such as expected queuing time at the energy supply stations and/or other parameters that may increase in relevance for un-booked time slots.

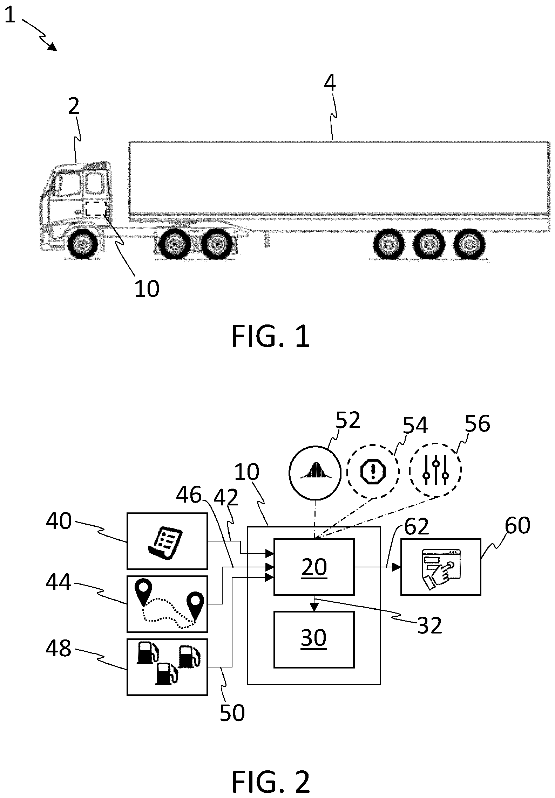

FIG. 1 illustrates a heavy-duty vehicle according to at least one example of this disclosure. More specifically, FIG. 1 illustrates a heavy-duty vehicle combination 1 which comprises a heavy-duty vehicle in the form of a tractor 2 which pulls a trailer 4. The trailer 4 may carry goods to be delivered in a transport mission. The teaching of the present disclosure is not limited to a particular vehicle propulsion system, but as has been discussed elsewhere in this disclosure, due to envisage infrastructure limitations, the teaching of the present disclosure is particularly advantageous for fuel cell electric vehicles (FCEVs), and also for battery electric vehicles (BEVs).

The heavy-duty vehicle 2 may comprise a mission management system 10 according to various examples of this disclosure. However, it should be understood that, in some examples, some of the components of the mission management system **10** may be provided remote from the heavy-duty vehicle **2.** Thus, in some examples, the mission management system **10** may be a distributed system wherein some processes are executed onboard the heavy-duty vehicle **2** and other processes are executed off-board, remotely from the heavy-duty vehicle **2.**

**FIG. 2** illustrates a mission management system **10** according to at least one example of this disclosure. The mission management system **10,** either partly or in its entirety, may suitably be implemented in a heavy-duty vehicle, such as the one illustrated in **FIG. 1,** or any other heavy-duty vehicle that is used for carrying out transport missions.

The mission management system **10** comprises processing circuitry 20 and a memory **30.** Again, analogously to the above explanations, some parts of the processing circuitry **20** and/or memory **30** may, in some examples, be provided off-board the heavy-duty vehicle.

The processing circuitry **20** is configured to receive a request for a transport mission **40** for the heavy-duty vehicle, the transport mission **40** including a start location and a target location. The request may be received in the form of request data **42.** For instance, the processing circuitry **20** may receive the request wirelessly over the air. For example, a back-office server may send the request using telematics communication such as 4G/5G. The communication between such a remote server and the heavy-duty vehicle may suitably be performed over a secured communication channel, such as via a secure portal of the fleet owner, to which a log-in is required for sharing credentials, work orders, etc. However, it is also conceivable to have a processing circuitry **20** which is configured to receive the request by local manual input. For example, the driver may manually, via a user interface in the heavy-duty vehicle, input the relevant data of the transport mission **40.** Other examples include using hand-held communication devices, such as cellular phones, for sending the request to the processing circuitry **20,** for example after scanning a QR code on a printed work order.

The processing circuitry **20** is configured to identify one or more available routes **44** from the start location to the target location. This identification may be in the form of route identification data **46.** The processing circuitry **20** may, for example, acquire such route identification data **46** from map providers, from a stored map or a navigation system, such as GIS, GPS, etc. For long-haul transport missions, there may be several optional routes **44** available from the start location to the target location.

The processing circuitry **20** is also configured to identify, along one or more of the available routes, energy supply stations **48** which are suitable for re-supplying energy to the heavy-duty vehicle. For example, if the heavy-duty vehicle is an FCEV, suitably energy supply stations would be $H_2$ refueling stations. If the heavy-duty vehicle is a BEV, suitable energy supply stations would be battery charging stations. The identification also includes which ones of the suitable energy supply stations **48** have available un-booked time slots for re-supplying energy to the heavy-duty vehicle. This identification may be in the form of energy supply station identification data **50.** The processing circuitry **20** may, for example, acquire such energy supply station identification data **50** from map providers, from a stored map or a navigation system, etc.

The processing circuitry **20** is further configured to determine, for at least one available un-booked time slot of at least one of the identified energy supply stations **48,** a probability **52** of missing that time slot due to the heavy-duty vehicle arriving late to the energy supply station **48.** Such probability **52** may be determined, for example by estimations or calculations, in various ways. For example, the processing circuitry **20** may take into account several factors. One such factor may be an estimated travel time from the current location of the heavy-duty vehicle to the identified energy supply station **48.** Another factor may be the distance to the identified energy supply station **48.** A further factor may be the road topography, e.g. uphill climbs, including the number of such uphill climbs and the grade of each uphill climb, which may have considerable effect on the probability of running late compared to if the relevant road section is substantially flat. Yet another factor may be potential delays such as traffic, weather conditions, time of the day, etc. A further factor may be historical data, such as including previous success rates for similar conditions.

Here follows one example of how the processing circuitry **20** may determine the probability **52** of missing the time slot due to the heavy-duty vehicle arriving late to the energy supply station **48.** It should, however, be appreciated that other ways may also be conceivable. As explained above there may be several factors which may affect the probability. Such factors may have a stochastic nature. For example, average vehicle speed may be an input parameter having stochastic nature. When the heavy-duty vehicle is travelling on a road, the remaining distance to the identified energy supply station 48 may be divided into a plurality of road segments. For each road segment, speed data may have been collected and logged over time. This may suitably be done for different vehicles. Such historical data may include, for each segment, how the average vehicle speed may vary, for example due to the time of the day. The historical data may, for example, be stored in the memory **30** (or in another memory/database/server accessible by the processing circuitry 20). Data may suitably be logged continuously to build a geo-spatial database of distribution curve for relevant stochastic parameters, classified per type of vehicle. Each road segment may therefore have an assigned distribution curve (for a certain time of the day and a certain vehicle type). Such a distribution curve may therefore show, for example, a distribution of average speed based on historical data. This may, in turn, be used to calculate a distribution curve for the arrival time. The distribution curve for the arrival time will normally have a larger spread if the distance to the energy supply station **48** is large, whereas there will be a smaller spread if the distance is small. The distribution curve thus maps expected arrival time based on historical data. The processing circuitry **20** can then simply calculate the probability **52** by taking the number of points mapped at an arrival time before the available time slot and dividing that number with the total number of points that have been mapped.

From the above it can be understood that for long-haul transport missions, the processing circuitry 20 may suitably identify several possible routes 44, and for each one of said routes 44 identify a plurality of energy supply stations 48, and for each one of said plurality of energy supply stations 48 identify if there is one or more un-booked available time slot. For each such identified un-booked available time slot, the processing circuitry 20 may determine a probability 52 of missing the respective time slot due to the heavy-duty vehicle arriving late to the energy supply station 48. This probability 52 can then be used by the processing circuitry 20 for selecting a route 44 and an energy re-supply plan associated thereto. Such a plan can include a stop at a single energy supply station 48 or stops at two or more energy supply stations 48 along the route 44.

From the above it can thus also be understood that, in general terms, the processing circuity 20 is configured to determine, based on the determined probability 52, a route 44 and an energy re-supply plan associated thereto, for the heavy-duty vehicle for accomplishing said transport mission. The processing circuity 20 is also configured to present the selected route 44 and associated energy re-supply plan to a user interface 60 and/or provide the selected route and associated energy re-supply plan for storage in the memory 30. This is illustrated by arrows representing presentation data 62 and provision data 32, respectively. Such a user interface 60 may, for example, be a display in the heavy-duty vehicle, and/or it may be a display at a separate entity such as a cellular phone or an off-board computer display, etc. Similarly, the memory 30 may be a local memory in the heavy-duty vehicle and/or an off-board memory, such as on a remote server. By following the selected route 44 and associated energy re-supply plan, the likelihood of the transport mission 40 being carried out efficiently is increased.

As explained previously in this disclosure, to provide further robustness in the selection of route 44 and associated energy re-supply plan, the criticality of missing an identified time slot of an energy supply station 48 may also be taken into account, at least in some examples. If the effect of missing a time slot is relatively low, e.g. a low penalty cost in a calculation, it may still be worth selecting that time slot even though the probability 52 of missing it is relatively high, as opposed to selecting a time slot for which the probability 52 of missing it is relatively low but the consequences of actually missing it comes with a very high penalty cost. Accordingly, in at least some examples, the processing circuitry 20 may be further configured to determine a measure of criticality 54 with respect to missing said time slot and to also base the selection of route 44 and associated energy re-supply plan on the determined measure of criticality 54, wherein the measure of criticality 54 is in the form of a criticality parameter value which is calculated by the processing circuitry 20 based on other parameters accessible to the processing circuitry 20. As already mentioned previously in this disclosure, such other parameters may include expected fuel or battery charge level, expected queue time, price of fuel/electricity, driving time, distance, etc.

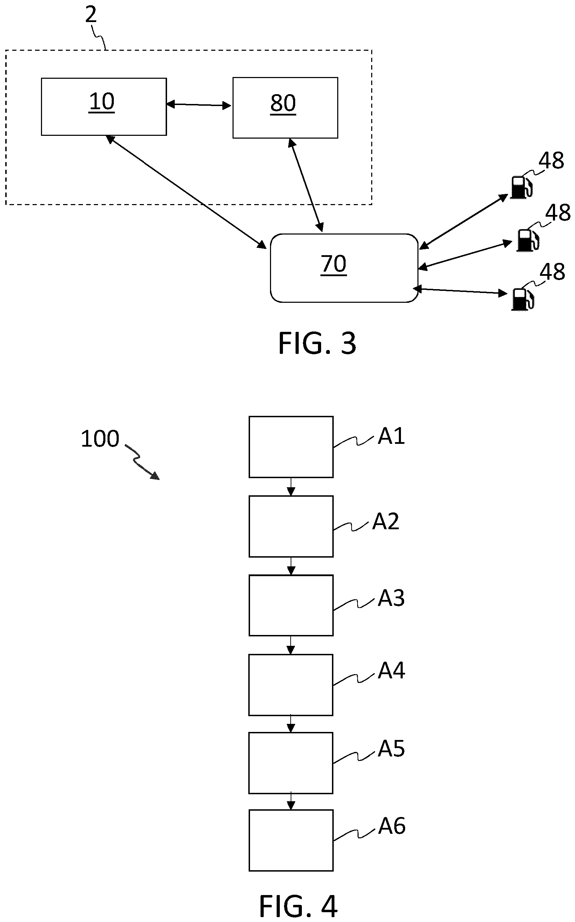

FIG. 3 illustrates a mission management system 10 according to at least one example of this disclosure, wherein the mission management system 10 communicates with a remote server 70. In this example, there is schematically illustrated that a heavy-duty vehicle 2 has said mission management system 10 as well as a booking system 80. In other examples, the booking system 80 may be incorporated in the mission management system 10 provided in the heavy-duty vehicle 2. In other examples the booking system 80 may be off-board the heavy-duty vehicle 2 (and at least some parts of the mission management system 10 may also be off-board). In the illustrated example, both the mission management system 10 and the booking system 80 may communicate with the remote server 70, which in turn may communicate with refilling stations 48, and execute booking of time slots of the refilling stations 48.

Because a selected energy re-supply plan may include a selected available un-booked time slot at a selected energy supply station 48, the processing circuitry of the mission management system 10 may further be configured to automatically book or send instructions to book said selected available un-booked time slot. Thus, in the example of FIG. 3 the mission management system 10 may, by means of its processing circuitry, acquire information via the remote server 70, about available time slots of different energy supply stations 48 and may, upon selection of a route and associated energy re-supply plan, send instruction to the booking system 80. The booking system 80 will then via the remote server 70 book the said selected available un-booked time slot. It should be emphasized that FIG. 3 just shows one schematic illustrative example, and that automatic booking may be accomplished in various different system configurations within the scope of the present disclosure. Furthermore, it should be understood that in other examples, a booking system 80 may be omitted. However, then the processing circuitry may also take into account factors such as average queueing time at different un-booked energy supply stations 48, when making its selection.

Turning back to FIG. 2, because conditions may change over time, the processing circuitry 20 may suitably be configured to reevaluate its previous selection. Thus, subsequently to presenting and/or providing the selected route and associated energy re-supply plan, the processing circuitry 20 may suitably redetermine the probability 52 of missing the relevant time slot and may determine to cancel the previously selected route 44 and associated energy re-supply plan. The processing circuitry 20 may therefore then determine and present/provide a new selected route 44 and associated energy re-supply plan. This may suitably be carried out analogously to what has already been discussed in relation to FIG. 2, for example by reiterating the acquiring of request data 42, rout identification data 46 and the energy supply station identification data 50.

As already discussed elsewhere in this disclosure, in some simple and straightforward examples, the processing circuitry **20** may be configured to compare the determined probability **52** of missing the relevant time slot with a predefined limit value. For example, if the determined probability **52** is lower than said predefined limit value then the time slot may be included as part of the energy re-supply plan, whereas if the determined probability **52** is higher than said predefined limit value then the processing circuitry 20 may not include it in the energy re-supply plan. As also discussed elsewhere, instead of just doing a simple comparison, the determined probability **52** may be one of several input parameters in a function. For example, the above-mentioned measure of criticality **54,** i.e. the criticality parameter value, may also be included in such a function. Other examples of input parameters **56** may include an expected queue time at the identified energy supply station **48,** and an expected fuel level or battery charge level of the heavy-duty vehicle at the energy supply station **48.** An output value of the function may be compared to a predefined allowable range of output values. If the output value is within the allowable range the time slot may be included as part of the energy re-supply plan, whereas, if the output value is outside of the allowable range, then the processing circuitry **20** may not include said time slot in the energy re-supply plan. The function may also be implemented as a cost function, wherein the processing circuitry **20** may be configured to identify the lowest calculated output value of the cost function and, consequently select a route **44** and associated energy re-supply plan based on those input values that resulted in the lowest output value. In addition to the determined probability **52** of being late, some examples of input parameters **56** in a cost function may include price of fuel/electricity, mass of fuel or amount of electric energy expected to be added to the heavy-duty vehicle at the energy supply station **48,** average queue time if the heavy-duty vehicle arrives without a time slot having been booked, expected fuel level or state of charge of battery of the heavy-duty vehicle at arrival to the energy supply station **48,** effectively added energy, distance from current location, etc.

FIG. 4 illustrates schematically a computer-implemented method **100** according to at least one example of this disclosure. In particular, **FIG. 4** illustrates that the computer-implement method **100** comprises the following actions **A1-A6:**

A1: - receiving, by processing circuitry of a mission management system, a request for a transport mission for the heavy-duty vehicle, the transport mission including a start location and a target location,

A2: - identifying, by the processing circuitry, one or more available routes from the start location to the target location,

A3: - identifying, by the processing circuitry, along said one or more available routes, energy supply stations which are suitable for re-supplying energy to the heavy-duty vehicle and which have available un-booked time slots re-supplying energy to the heavy-duty vehicle,

A4: - determining, by the processing circuitry, for at least one available un-booked time slot of at least one of the identified energy supply stations, a probability of missing that time slot due to the heavy-duty vehicle arriving late to the energy supply station,

A5: - selecting, by the processing circuitry, based on the determined probability, a route and an energy re-supply plan associated thereto, for the heavy-duty vehicle for accomplishing said transport mission, and

A6: - presenting, by the processing circuitry, the selected route and associated energy re-supply plan to a user interface and/or provide the selected route and associated energy re-supply plan for storage in the memory.

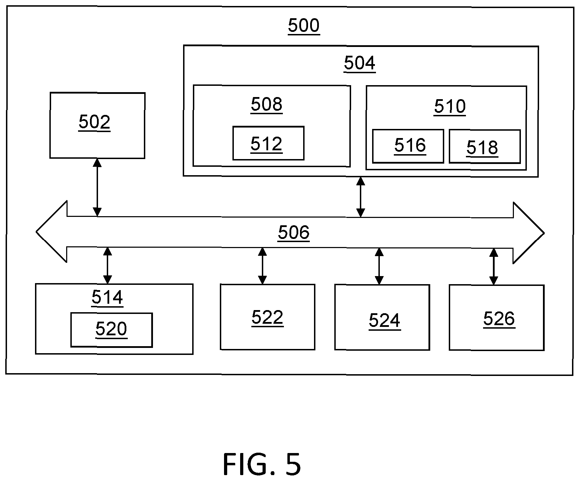

FIG. 5 is a schematic diagram of a computer system **500** for implementing examples disclosed herein. The computer system **500** in **FIG. 5** may, for example, correspond to the mission management system **10** in **FIG. 2.** The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506.** The processing circuitry **502** in **FIG. 5** may correspond to the processing circuitry **20** in **FIG. 2.** The memory **504** in **FIG. 5** may correspond to the memory **30** in **FIG. 2.** The computer system **500** may include at least one computing device having the processing circuitry **502**. The system bus **506** provides an interface for system components including, but not limited to, the memory **504** and the processing circuitry **502**. The processing circuitry **502** may include any number of hardware components for conducting data or signal processing or for executing computer code stored in memory **504**. The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502**. A basic input/output system (BIOS) **512** may be stored in the non-volatile memory **508** and can include the basic routines that help to transfer information between elements within the computer system **500**.

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502**. In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502**. The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A mission management system for a heavy-duty vehicle, wherein the mission management system comprises processing circuitry and a memory, wherein the processing circuitry is configured to:

- receive a request for a transport mission for the heavy-duty vehicle, the transport mission including a start location and a target location,
- identify one or more available routes from the start location to the target location,
- identify, along said one or more available routes, energy supply stations which are suitable for re-supplying energy to the heavy-duty vehicle and which have available un-booked time slots for re-supplying energy to the heavy-duty vehicle,
- determine, for at least one available un-booked time slot of at least one of the identified energy supply stations, a probability of missing that time slot due to the heavy-duty vehicle arriving late to the energy supply station,
- select, based on the determined probability, a route and an energy re-supply plan associated thereto, for the heavy-duty vehicle for accomplishing said transport mission, and
- present the selected route and associated energy re-supply plan to a user interface and/or provide the selected route and associated energy re-supply plan for storage in the memory.

Example 2: The mission management system of example 1, wherein the processing circuitry is further configured to determine a measure of criticality with respect to missing said time slot and to also base the selection of route and associated energy re-supply plan on the determined measure of criticality, wherein the measure of criticality is in the form of a criticality parameter value which is calculated by the processing circuitry based on other parameters accessible to the processing circuitry, including at least one of:

- an expected fuel level or battery charge level of the heavy-duty vehicle at the energy supply station,
- an expected queue time at the identified energy supply station,
- price of fuel, such as hydrogen, or price of electricity, at the energy supply station; or difference in price compared to other energy supply stations,
- driving time limit at said time slot,
- distance from the current location of the heavy-duty vehicle to the energy supply station having said time slot.

Example 3: The mission management system of any one of examples 1-2, wherein said associated energy re-supply plan includes a selected available un-booked time slot at a selected energy supply station, wherein the processing circuitry is further configured to:

- automatically book or send instructions to book said selected available un-booked time slot.

Example 4: The mission management system of any of examples 1-3, wherein the processing circuitry is further configured to:

- subsequently to presenting and/or providing the selected route and associated energy re-supply, redetermine, for said at least one time slot, the probability of missing the time slot due to the heavy-duty vehicle arriving late to the energy supply station,
- determine, based on the redetermined probability, that the previously selected route and associated energy re-supply plan is cancelled, and select a new route and a new energy re-supply plan associated thereto,
- present the selected new route and associated energy re-supply plan to a user interface and/or provide the selected new route and associated energy re-supply plan for storage in the memory.

Example 5: The mission management system of any of examples 1-4, wherein the processing circuitry is further configured to:

- compare the determined probability of missing the time slot of the identified energy supply station with a predefined limit value, wherein the determined probability has, optionally, been weighted by the criticality parameter value of example 2, and then

    a) - determine, based on the comparison, that the determined probability of missing the time slot is lower than the predefined limit value, and

        - include said time slot of the identified energy supply station in the selected energy re-supply plan, or

b) - determine, based on the comparison, that the determined probability of missing the time slot is higher than the predefined limit value, and

- exclude said time slot of the identified energy supply station from the selected energy re-supply plan.

Example 6: The mission management system of any of examples 1-4, wherein the processing circuitry is further configured to:

- include the determined probability as an input parameter in a function,
- compare the resulting output value of the function, with a predefined allowable range of output values, and then
- upon determining that the resulting output value is within the predefined allowable range of output values, include the identified energy supply station in the selected energy re-supply plan, or
- upon determining that the resulting output value is outside the predefined allowable range of output values, exclude the identified energy supply station from the selected energy re-supply plan.

Example 7: The mission management system of example 6, wherein the processing circuitry is further configured to include at least one of the following additional input parameters in said function:

- an expected queue time at the identified energy supply station,
- an expected fuel level or battery charge level of the heavy-duty vehicle at the energy supply station.

Example 8: The mission management system of any of examples 1-4, wherein the processing circuitry is further configured to:

- determine, for each one of at least two available un-booked time slots of a common or of a respective energy supply station, a respective probability of missing that time slot,
- calculate, for each one of the determined probabilities, a respective output value from a cost function, wherein the cost function includes the probability of missing a time slot as one of a plurality of input parameter values,
- identify the lowest calculated output value,

wherein the selection of the route and associated energy re-supply plan is based on the input parameter values that results in the lowest output value of the cost function.

Example 9: The mission management system of example 8, wherein the cost function further includes one or more of the following input parameters:

- price of fuel, such as hydrogen, or price of electricity, at the energy supply station;
- mass of fuel, such as hydrogen, or amount of electric energy, expected to be added to the heavy-duty vehicle at the energy supply station;
- average queue time at the energy supply station if the heavy-duty vehicle arrives without a time slot having been booked;
- expected fuel level or state of charge of battery of the heavy-duty vehicle at arrival to the energy supply station;
- effectively added fuel or effectively added electric energy, in terms of difference in fuel/charge level at completion of transport mission with or without refueling event,
- distance from the current location of the heavy-duty vehicle to the energy supply station having said time slot.

Example 10: The mission management system of any of examples 1-9, wherein the heavy-duty vehicle is a fuel cell electric vehicle, FCEV, powered by hydrogen, H2, wherein the processing circuitry is configured to identify, along said one or more available routes, energy supply stations in the form of refueling stations, which have available un-booked time slots for refueling the heavy-duty vehicle with hydrogen.

Example 11: The mission management system of any of examples 1-9, wherein the heavy-duty vehicle is a battery electric vehicle, BEV, powered by one or more traction batteries, wherein the processing circuitry is configured to identify, along said one or more available routes, energy supply stations in the form of recharging stations, which have available un-booked time slots for recharging the traction batteries of the heavy-duty vehicle.

Example 12: A heavy-duty vehicle comprising the mission management system of any of examples 1-11.

Example 13: A computer-implemented method, comprising:

- receiving, by processing circuitry of a mission management system, a request for a transport mission for the heavy-duty vehicle, the transport mission including a start location and a target location,

- identifying, by the processing circuitry, one or more available routes from the start location to the target location,
- identifying, by the processing circuitry, along said one or more available routes, energy supply stations which are suitable for re-supplying energy to the heavy-duty vehicle and which have available un-booked time slots re-supplying energy to the heavy-duty vehicle,
- determining, by the processing circuitry, for at least one available un-booked time slot of at least one of the identified energy supply stations, a probability of missing that time slot due to the heavy-duty vehicle arriving late to the energy supply station,
- selecting, by the processing circuitry, based on the determined probability, a route and an energy re-supply plan associated thereto, for the heavy-duty vehicle for accomplishing said transport mission, and
- presenting, by the processing circuitry, the selected route and associated energy re-supply plan to a user interface and/or provide the selected route and associated energy re-supply plan for storage in the memory.

Example 14. A computer program product comprising program code for performing, when executed by the processing circuitry, the method of example 13.

Example 15: A non-transitory computer-readable storage medium comprising instructions, which when executed by the processing circuitry, cause the processing circuitry to perform the method of example 13.

Example 16: The computer-implemented method of example 13, further comprising determining, by the processing circuitry, a measure of criticality with respect to missing said time slot and also basing the selection of route and associated energy re-supply plan on the determined measure of criticality, wherein the measure of criticality is in the form of a criticality parameter value which is calculated by the processing circuitry based on other parameters accessible to the processing circuitry, including at least one of:

- an expected fuel level or battery charge level of the heavy-duty vehicle at the energy supply station,
- an expected queue time at the identified energy supply station,
- price of fuel, such as hydrogen, or price of electricity, at the energy supply station; or difference in price compared to other energy supply stations,
- driving time limit at said time slot,
- distance from the current location of the heavy-duty vehicle to the energy supply station having said time slot.

Example 17: The computer-implemented method of any one of examples 13 or 16, wherein said associated energy re-supply plan includes a selected available un-booked time slot at a selected energy supply station, the method further comprising:

- automatically booking or sending instructions to book, by the processing circuitry, said selected available un-booked time slot.

Example 18: The computer-implemented method of any of examples 13 or 16-17, further comprising:

- subsequently to presenting and/or providing the selected route and associated energy re-supply plan, redetermining, by the processing circuitry, for said at least one time slot, the probability of missing the time slot due to the heavy-duty vehicle arriving late to the energy supply station,
- determining, by the processing circuitry, based on the redetermined probability, that the previously selected route and associated energy re-supply plan is cancelled, and selecting, by the processing circuitry, a new route and a new energy re-supply plan associated thereto,
- presenting, by the processing circuitry, the selected new route and associated energy re-supply plan to a user interface and/or providing, by the processing circuitry, the selected new route and associated energy re-supply plan for storage in the memory.

Example 19: The computer-implemented method of any of examples 13 or 16-18, further comprising:

- comparing, by the processing circuitry, the determined probability of missing the time slot of the identified energy supply station with a predefined limit value, and then

   a) - determining, by the processing circuitry, based on the comparison, that the determined probability of missing the time slot is lower than the predefined limit value, and

   - including, by the processing circuitry, said time slot of the identified energy supply station in the selected energy re-supply plan,

or

b) - determining, by the processing circuitry, based on the comparison, that the determined probability of missing the time slot is higher than the predefined limit value, and

- excluding, by the processing circuitry, said time slot of the identified energy supply station from the selected energy re-supply plan.

Example 20: The computer-implemented method of any of examples 13 or 16-19, further comprising:

- including, by the processing circuitry, the determined probability as an input parameter in a function,
- comparing, by the processing circuitry, the resulting output value of the function, with a predefined allowable range of output values, and then
- upon determining that the resulting output value is within the predefined allowable range of output values, including, by the processing circuitry, the identified energy supply station in the selected energy re-supply plan, or
- upon determining that the resulting output value is outside the predefined allowable range of output values, excluding, by the processing circuitry, the identified energy supply station from the selected energy re-supply plan.

Example 21: The computer-implemented method of example 20, further comprising including, by the processing circuitry, at least one of the following additional input parameters in said function:

- an expected queue time at the identified energy supply station,
- an expected fuel level or battery charge level of the heavy-duty vehicle at the energy supply station.

Example 22: The computer-implemented method of any of examples 13 or 16-21, further comprising:

- determining, by the processing circuitry, for each one of at least two available un-booked time slots of a common or of a respective energy supply station, a respective probability of missing that time slot,
- calculating, by the processing circuitry, for each one of the determined probabilities, a respective output value from a cost function, wherein the cost function includes the probability of missing a time slot as one of a plurality of input parameter values,
- identifying, by the processing circuitry, the lowest calculated output value,

wherein the selection of the route and associated energy re-supply plan is based on the input parameter values that results in the lowest output value of the cost function.

Example 23: The computer-implemented method of example 22, wherein the cost function further includes one or more of the following input parameters:

- price of fuel, such as hydrogen, or price of electricity, at the energy supply station;
- mass of fuel, such as hydrogen, or amount of electric energy, expected to be added to the heavy-duty vehicle at the energy supply station;
- average queue time at the energy supply station if the heavy-duty vehicle arrives without a time slot having been booked;
- expected fuel level or state of charge of battery of the heavy-duty vehicle at arrival to the energy supply station;
- effectively added fuel or effectively added electric energy, in terms of difference in fuel/charge level at completion of transport mission with or without refueling event,
- distance from the current location of the heavy-duty vehicle to the energy supply station having said time slot.

Example 24: The computer-implemented method of any of examples 13 or 16-23, wherein the heavy-duty vehicle is a fuel cell electric vehicle, FCEV, powered by hydrogen, H2, wherein the method comprises identifying, by the processing circuitry, along said one or more available routes, energy supply stations in the form of refueling stations, which have available un-booked time slots for refueling the heavy-duty vehicle with hydrogen.

Example 25: The computer-implemented method of any of examples 13 or 16-23, wherein the heavy-duty vehicle is a battery electric vehicle, BEV, powered by one or more traction batteries, wherein the method comprises identifying, by the processing circuitry, along said one or more available routes, energy supply stations in the form of recharging stations, which have available un-booked time slots for recharging the traction batteries of the heavy-duty vehicle.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1.  A mission management system for a heavy-duty vehicle, wherein the mission management system comprises processing circuitry and a memory, wherein the processing circuitry is configured to:

    - receive a request for a transport mission for the heavy-duty vehicle, the transport mission including a start location and a target location,
    - identify one or more available routes from the start location to the target location,
    - identify, along said one or more available routes, energy supply stations which are suitable for re-supplying energy to the heavy-duty vehicle and which have available un-booked time slots for re-supplying energy to the heavy-duty vehicle,
    - determine, for at least one available un-booked time slot of at least one of the identified energy supply stations, a probability of missing that time slot due to the heavy-duty vehicle arriving late to the energy supply station,
    - select, based on the determined probability, a route and an energy re-supply plan associated thereto, for the heavy-duty vehicle for accomplishing said transport mission, and
    - present the selected route and associated energy re-supply plan to a user interface and/or provide the selected route and associated energy re-supply plan for storage in the memory.

2.  The mission management system of claim 1, wherein the processing circuitry is further configured to determine a measure of criticality with respect to missing said time slot and to also base the selection of route and associated energy re-supply plan on the determined measure of criticality, wherein the measure of criticality is in the form of a criticality parameter value which is calculated by the processing circuitry based on other parameters accessible to the processing circuitry, including at least one of:

    - an expected fuel level or battery charge level of the heavy-duty vehicle at the energy supply station,
    - an expected queue time at the identified energy supply station,
    - price of fuel, such as hydrogen, or price of electricity, at the energy supply station; or difference in price compared to other energy supply stations,
    - driving time limit at said time slot,
    - distance from the current location of the heavy-duty vehicle to the energy supply station having said time slot.

3. The mission management system of any one of claims 1-2, wherein said associated energy re-supply plan includes a selected available un-booked time slot at a selected energy supply station, wherein the processing circuitry is further configured to:

  - automatically book or send instructions to book said selected available un-booked time slot.

4. The mission management system of any of claims 1-3, wherein the processing circuitry is further configured to:

  - subsequently to presenting and/or providing the selected route and associated energy re-supply plan, redetermine, for said at least one time slot, the probability of missing the time slot due to the heavy-duty vehicle arriving late to the energy supply station,
  - determine, based on the redetermined probability, that the previously selected route and associated energy re-supply plan is cancelled, and select a new route and a new energy re-supply plan associated thereto,
  - present the selected new route and associated energy re-supply plan to a user interface and/or provide the selected new route and associated energy re-supply plan for storage in the memory.

5. The mission management system of any of claims 1-4, wherein the processing circuitry is further configured to:

  - compare the determined probability of missing the time slot of the identified energy supply station with a predefined limit value, wherein the determined probability has, optionally, been weighted by the criticality parameter value of claim 2, and then

    a) - determine, based on the comparison, that the determined probability of missing the time slot is lower than the predefined limit value, and

      - include said time slot of the identified energy supply station in the selected energy re-supply plan, or

    b) - determine, based on the comparison, that the determined probability of missing the time slot is higher than the predefined limit value, and

      - exclude said time slot of the identified energy supply station from the selected energy re-supply plan.

6. The mission management system of any of claims 1-4, wherein the processing circuitry is further configured to:

  - include the determined probability as an input parameter in a function,
  - compare the resulting output value of the function, with a predefined allowable range of output values, and then
  - upon determining that the resulting output value is within the predefined allowable range of output values, include the identified energy supply station in the selected energy re-supply plan, or
  - upon determining that the resulting output value is outside the predefined allowable range of output values, exclude the identified energy supply station from the selected energy re-supply plan.

7. The mission management system of claim 6, wherein the processing circuitry is further configured to include at least one of the following additional input parameters in said function:

  - an expected queue time at the identified energy supply station,
  - an expected fuel level or battery charge level of the heavy-duty vehicle at the energy supply station.

8. The mission management system of any of claims 1-4, wherein the processing circuitry is further configured to:

  - determine, for each one of at least two available un-booked time slots of a common or of a respective energy supply station, a respective probability of missing that time slot,
  - calculate, for each one of the determined probabilities, a respective output value from a cost function, wherein the cost function includes the probability of missing a time slot as one of a plurality of input parameter values,
  - identify the lowest calculated output value,

wherein the selection of the route and associated energy re-supply plan is based on the input parameter values that results in the lowest output value of the cost function.

9. The mission management system of claim 8, wherein the cost function further includes one or more of the following input parameters:

- price of fuel, such as hydrogen, or price of electricity, at the energy supply station;
- mass of fuel, such as hydrogen, or amount of electric energy, expected to be added to the heavy-duty vehicle at the energy supply station;
- average queue time at the energy supply station if the heavy-duty vehicle arrives without a time slot having been booked;
- expected fuel level or state of charge of battery of the heavy-duty vehicle at arrival to the energy supply station;
- effectively added fuel or effectively added electric energy, in terms of difference in fuel/charge level at completion of transport mission with or without refueling event,
- distance from the current location of the heavy-duty vehicle to the energy supply station having said time slot.

10. The mission management system of any of claims 1-9, wherein the heavy-duty vehicle is a fuel cell electric vehicle, FCEV, powered by hydrogen, $H_2$, wherein the processing circuitry is configured to identify, along said one or more available routes, energy supply stations in the form of refueling stations, which have available un-booked time slots for refueling the heavy-duty vehicle with hydrogen.

11. The mission management system of any of claims 1-9, wherein the heavy-duty vehicle is a battery electric vehicle, BEV, powered by one or more traction batteries, wherein the processing circuitry is configured to identify, along said one or more available routes, energy supply stations in the form of recharging stations, which have available un-booked time slots for recharging the traction batteries of the heavy-duty vehicle.

12. A heavy-duty vehicle comprising the mission management system of any of claims 1-11.

13. A computer-implemented method, comprising:

- receiving, by processing circuitry of a mission management system, a request for a transport mission for the heavy-duty vehicle, the transport mission including a start location and a target location,
- identifying, by the processing circuitry, one or more available routes from the start location to the target location,
- identifying, by the processing circuitry, along said one or more available routes, energy supply stations which are suitable for re-supplying energy to the heavy-duty vehicle and which have available un-booked time slots re-supplying energy to the heavy-duty vehicle,
- determining, by the processing circuitry, for at least one available un-booked time slot of at least one of the identified energy supply stations, a probability of missing that time slot due to the heavy-duty vehicle arriving late to the energy supply station,
- selecting, by the processing circuitry, based on the determined probability, a route and an energy re-supply plan associated thereto, for the heavy-duty vehicle for accomplishing said transport mission, and
- presenting, by the processing circuitry, the selected route and associated energy re-supply plan to a user interface and/or provide the selected route and associated energy re-supply plan for storage in the memory.

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 13.

FIG. 1

FIG. 2

FIG. 3

FIG. 4

FIG. 5

Europäisches
Patentamt
European
Patent Office
Office européen
des brevets

# EUROPEAN SEARCH REPORT

**Application Number**

EP 24 19 8932

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/221103 A1 (WARD MATTHEW L [US]) 4 July 2024 (2024-07-04) | 1-4,7, 11-15 | INV. B60L50/75 |
| Y | * the whole document * | 5,6,8-10 | B60L58/13 G01C21/34 |
| | ----- | | G06Q10/047 |
| X | EP 4 219 226 A1 (ZECO SYSTEMS PTE LTD [SG]) 2 August 2023 (2023-08-02) | 1,2,5,6, 8,9, 13-15 | G06Q50/06 |
| Y | * paragraph [0003] - paragraph [0014] * * paragraph [0078] - paragraph [0142] * | 5,6,8,9 | |
| | ----- | | |
| Y | WO 2024/008265 A1 (VOLVO TRUCK CORP [SE]) 11 January 2024 (2024-01-11) * page 1 - page 6 * | 10 | |
| | ----- | | |
| Y | US 2022/301043 A1 (LÖTHMAN MIKAEL [SE] ET AL) 22 September 2022 (2022-09-22) * paragraph [0135] - paragraph [0170] * | 5,6 | |
| | ----- | | |

**TECHNICAL FIELDS SEARCHED (IPC)**

B60L
G01C
G06Q

The present search report has been drawn up for all claims

| Place of search | Date of completion of the search | Examiner |
|---|---|---|
| Munich | 20 February 2025 | Veshi, Erzim |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 19 8932

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2025

| Patent document cited in search report | Publication date | Patent family member(s) | | Publication date |
|---|---|---|---|---|
| US 2024221103 A1 | 04-07-2024 | NONE | | |
| EP 4219226 A1 | 02-08-2023 | DK | 2768695 T3 | 17-05-2021 |
| | | EP | 2768695 A2 | 27-08-2014 |
| | | EP | 3922506 A2 | 15-12-2021 |
| | | EP | 4219226 A1 | 02-08-2023 |
| | | EP | 4219227 A2 | 02-08-2023 |
| | | ES | 2872277 T3 | 02-11-2021 |
| | | PT | 2768695 T | 21-05-2021 |
| | | US | 2013110296 A1 | 02-05-2013 |
| | | US | 2016339792 A1 | 24-11-2016 |
| | | US | 2016339793 A1 | 24-11-2016 |
| | | US | 2016362016 A1 | 15-12-2016 |
| | | US | 2016364658 A1 | 15-12-2016 |
| | | US | 2016364776 A1 | 15-12-2016 |
| | | US | 2019139107 A1 | 09-05-2019 |
| | | US | 2019156382 A1 | 23-05-2019 |
| | | US | 2019156383 A1 | 23-05-2019 |
| | | US | 2019156384 A1 | 23-05-2019 |
| | | US | 2019180336 A1 | 13-06-2019 |
| | | US | 2021073876 A1 | 11-03-2021 |
| | | US | 2021090139 A1 | 25-03-2021 |
| | | US | 2021090140 A1 | 25-03-2021 |
| | | US | 2021090141 A1 | 25-03-2021 |
| | | US | 2021110446 A1 | 15-04-2021 |
| | | US | 2023401613 A1 | 14-12-2023 |
| | | US | 2023410162 A1 | 21-12-2023 |
| | | WO | 2013057587 A2 | 25-04-2013 |
| WO 2024008265 A1 | 11-01-2024 | CN | 119451848 A | 14-02-2025 |
| | | WO | 2024008265 A1 | 11-01-2024 |
| US 2022301043 A1 | 22-09-2022 | US | 2022300862 A1 | 22-09-2022 |
| | | US | 2022300863 A1 | 22-09-2022 |
| | | US | 2022300878 A1 | 22-09-2022 |
| | | US | 2022301043 A1 | 22-09-2022 |
| | | US | 2022301044 A1 | 22-09-2022 |

EPO FORM P0459

For more details about this annex : see Official Journal of the European Patent Office, No. 12/82